# EUROPÄISCHE PATENTANMELDUNG

(11) **EP 1 975 122 A1**
(43) Veröffentlichungstag der Anmeldung: **01.10.2008**
(21) Anmeldenummer: 07006756.6
(22) Anmeldetag: 30.03.2007
(51) Int. Cl.: C01B 3/04, C01B 3/34, B01J 19/12

(54) **Reformer für Brennstoffzellen**

(71) Anmelder: Bleeker, Thomas, 81375 München (DE)
(72) Erfinder: Bleeker, Thomas, 81375 München (DE)
(74) Vertreter: Grünecker, Kinkeldey, Stockmair & Schwanhäusser Anwaltssozietät

(57) **Zusammenfassung**

Die Erfindung betrifft einen Reformer zur Reformierung von Brennstoff für Brennstoffzellen, welcher eine Prozesskammer und eine Mikrowellenquelle (2) zur Erzeugung von Mikrowellenstrahlung umfasst, wobei die Prozesskammer (3) und die Mikrowellenquelle derart zueinander angeordnet sind, dass in der Prozesskammer enthaltener Brennstoff mittels Mikrowellenstrahlung reformierbar ist. Weiterhin betrifft die Erfindung ein Verfahren zur Reformierung von Brennstoff für Brennstoffzellen, in weichem der Brennstoff mit Mikrowellen reformiert wird.

## Beschreibung

### Gebiet der Erfindung

Die Erfindung betrifft einen Reformer zur Reformierung von Brennstoff für Brennstoffzellen. Weiterhin betrifft die Erfindung ein Verfahren zur Reformierung von Brennstoff für Brennstoffzellen.

### Stand der Technik

Reformer für Brennstoffzellen sind Vorrichtungen, die einen Brennstoff in eine für die Brennstoffzelle verwertbare Form umwandeln. Beispielsweise sind Methanol-Reformer bekannt, die von Methanol Wasserstoff für die Brennstoffzelle abspalten, welcher danach einer Wasserstoff-Brennstoffzelle zugeführt werden kann.

Herkömmliche Reformer erreichen diese Umformung durch thermischen Energieeintrag, wodurch die Möglichkeit des Crackens der Brennstoffe besteht und somit eine Verrußung der Anlage mit Reduzierung des Wirkungsgrades und /oder der Lebens- und / oder Betriebsdauer erfolgen kann.

### Beschreibung der Erfindung

Nachteilig ist bei den Reformern nach dem Stand der Technik, dass diese speziell für einen bestimmten Reformierungsprozess ausgelegt sind und nicht flexibel bei verschiedenen Arten von Brennstoff eingesetzt werden können. Weiterhin entstehen prozessunwirksame und /oder für den Prozess schädliche Nebenprodukte.

Aufgabe der Erfindung ist es, diesen Nachteil zu überwinden, und einen Reformer zur Verfügung zu stellen, der einen einfachen Aufbau hat, und der einfach an verschiedenartige Brennstoffe adaptiert werden kann. Weiterhin soll ein zuverlässiger Betrieb gewährleistet werden. Zudem sollen Wirkungsgrad und / oder Betriebsdauer und / oder Umweltbelastung durch Ruß oder weitere für den Prozess unnötige Stoffbildungen vermieden werden.

Diese Aufgabe wird gelöst durch einen Reformer zur Reformierung von Brennstoff für Brennstoffzellen, welcher eine Prozesskammer und eine Mikrowellenquelle zur Erzeugung von Mikrowellenstrahlung umfasst, wobei die Prozesskammer und die Mikrowellenquelle derart zueinander angeordnet sind, dass in der Prozesskammer enthaltener Brennstoff mittels Mikrowellenstrahlung reformierbar ist.

Als Brennstoffe sind dabei alle Kohlenwasserstoffverbindungen und / oder deren Gemische zu verstehen. Weiterhin kann H₂O in reiner Form als Brennstoff oder in Verbindung mit anderen Brennstoffen verwendet werden.

Die Mikrowellenquelle kann eine in Frequenz und Leistung auf den jeweiligen Brennstoff abgestimmte Mikrowellenstrahlung ausstrahlen. Die durch die Mikrowellenquelle erzeugte Mikrowellenstrahlung wirkt auf den Brennstoff ein und reformiert diesen.

Eine Weiterbildung des erfindungsgemäßen Reformers besteht darin, dass die Mikrowellenquelle und die Prozesskammer über eine Öffnung in der Prozesskammer mechanisch miteinander verbunden sein können. Dabei ragt der Strahlungsaustritt der Mikrowellenquelle in die Prozesskammer. Somit wird eine einfache Ankopplung der Mikrowellenquelle an die Prozesskammer zur Verfügung gestellt.

Eine Weiterbildung der zuvor genannten Weiterbildung des erfindungsgemäßen Reformers besteht darin, dass die Prozesskammer einen ersten und einen zweiten Abschnitt aufweisen kann, wobei der erste Abschnitt die Öffnung umfasst, der zweite Abschnitt für den Brennstoff vorgesehen ist, und der erste und der zweite Abschnitt durch eine brennstoffresistente, für Mikrowellenstrahlung durchlässige Trenneinrichtung von der Mikrowellenquelle getrennt sind. Dadurch kann die Mikrowellenquelle vor Einwirkungen des Brennstoffs geschützt werden.

Eine Weiterbildung der zuvor genannten Weiterbildung besteht darin, dass die Trenneinrichtung Glas umfassen kann. Dieses stellt eine einfache und kostengünstige Ausführung der Trenneinrichtung zur Verfügung.

Eine andere Weiterbildung des erfindungsgemäßen Reformers sowie aller seiner Weiterbildungen besteht darin, dass die Prozesskammer einen Einlass für Brennstoff und einen Auslass für reformierten Brennstoff aufweisen kann. Auf diese Weise ist der Brennstoff auf einfache Weise in die Prozesskammer einzulassen und der reformierte Brennstoff aus der Prozesskammer auszulassen. Zudem kann ein kontinuierlicher Reformierungsvorgang erzielt werden.

Eine Weiterbildung der zuvor genannten Weiterbildung besteht darin, dass der Auslass ein mikrowellenstrahlungsdichtes Gitter oder einen mikrowellenstrahlungsdichten Porenkörper umfassen kann. Dadurch kann der Auslass der Prozesskammer dicht für Mikrowellenstrahlung ausgebildet werden.

Eine andere Weiterbildung des erfindungsgemäßen Reformers sowie aller seiner Weiterbildungen besteht darin, dass in der Prozesskammer ein Verteiler für Brennstoff, vorzugsweise in Form eines Vlieses, vorgesehen sein kann. Dadurch kann insbesondere für flüssige Brennstoffe eine gute Verteilung des Brennstoffs in der Prozesskammer erzielt werden.

Eine andere Weiterbildung des erfindungsgemäßen Reformers sowie aller seiner Weiterbildungen besteht darin, dass die Prozesskammer mikrowellenstrahlungsdicht ausgebildet sein kann, sie vorzugsweise eine Metallwand oder mehrere Metallwände umfasst, und höchst vorzugsweise eine Edelstahlwand oder mehrere Edelstahlwände umfasst. Damit wird vermieden, dass ein wesentlicher Anteil der Mikrowellenstrahlung aus der Prozesskammer durch die Wände entweicht.

Eine andere Weiterbildung des erfindungsgemäßen Reformers sowie aller seiner Weiterbildungen besteht darin, dass weiterhin ein Katalysator zur Weiterbehandlung des reformierten Brennstoffs vorgesehen sein kann. Dadurch kann der reformierte Brennstoff für eine individuelle Brennstoffzelle optimiert werden.

Eine andere Weiterbildung des erfindungsgemäßen Reformers sowie aller seiner Weiterbildungen besteht darin, dass die Mikrowellenquelle ein Magnetron sein kann. Dadurch wird eine leistungsfähige Mikrowellenquelle für den Reformierungsvorgang bereitgestellt.

Eine andere Weiterbildung besteht in einem System, welches einen erfindungsgemäßen Reformer oder eine seiner oben genannten Weiterbildungen sowie eine Brennstoffzelle umfasst, wobei der Brennstoffzelle durch den Reformer reformierter Brennstoff zugeführt werden kann.

Die oben genannte Aufgabe wird weiterhin durch ein Verfahren zur Reformierung von Brennstoff für Brennstoffzellen gelöst, in welchem der Brennstoff mit Mikrowellen reformiert wird. Die Aufbereitung der Brennstoffe und deren Stoffgemische erfolgt dabei beispielsweise über ein Magnetron, welches einen flüssigen Brennstoff, der z.B. über ein Rohr in eine Kammer eingebracht wird, in dem der Brennstoff im ersten Schritt verdampft und in einem weiteren Schritt molekular aufgespalten wird. Bei gasförmigen Brennstoffen entfällt der Verdampfungsschritt. Je nach Art und Bauweise der Brennstoffzelle ist es notwendig die so gewonnenen Moleküle und / oder Elemente durch weiteren Energieeintrag aus dem Magnetron aufzuspalten bis hin zum Plasma.

Sollte ein weiterer Energieeintrag zur Erwärmung oder Abkühlung der gewonnenen Stoffe vor der Einbringung in die Brennstoffzelle und / oder dem Katalysator notwendig sein, so kann dies über konventionelle Wärmeübertrager erfolgen.

Für die Erzeugung von Mikrowellen-Leistungen welche ein kostengünstiges Magnetron nicht ermöglicht, besteht weiterhin die Option mehrere Reformer parallel zu schalten. Dabei können auch unterschiedliche Laststufen vorgesehen sein. Alternativ können für eine Prozesskammer mehrere Magnetrone verwendet werden.

### Kurzbeschreibung der Zeichnungen

Fig. 1 zeigt eine Ausführungsform eines erfindungsgemäßen Reformers.
Fig. 2 zeigt einen erfindungsgemäßen Reformer mit Katalysator und Brennstoffzelle.

### Beschreibung der Ausführungsformen

Der erfindungsgemäße Reformer dient der Reformierung von Brennstoff für Brennstoffzellen, welche insbesondere im immobilen Bereich wie Haus- und Wohnanlagen für Wärme- und / oder Stromgewinnung respektive im mobilen Bereich wie bei Kraftfahrzeugen aller Art und Flugzeugen für Wärme und / oder Stromgewinnung Verwendung finden.

Die Brennstoffe werden in eine strahlungsdichte Prozesskammer eingeführt, in welchem unter Zuhilfenahme eines Magnetrons mit ausgewählter Leistung und Frequenz, die Brennstoffe auf physikalischer Ebene durch Änderung des Aggregatszustandes und / oder auf atomarer Ebene durch Erzeugung eines Plasmas aufgespalten werden und / oder auf chemischer Ebene durch Aufspaltung der Molekularketten umgewandelt werden. Die Prozesskammer ist strahlungsdicht und vorzugsweise aus Edelstahl ausgebildet. Ein nachgeschalteter Katalysator geeigneter Bauform kann die gewonnenen Stoffe für die individuelle Brennstoffzelle weiter verändern und somit den Betrieb der Brennstoffzelle bezüglich Wirkungsgrad und Lebensdauer optimieren.

Vorteilhafterweise ist bei flüssigen Brennstoffen ein Vlies für die Verteilung des Brennstoffes in der Prozesskammer zu verwenden, um den Brennstoff der Strahlung mit größtmöglicher Fläche bereitzustellen.

Um das Magnetron vor eventuellen Einwirkungen des Brennstoffes zu schützen, kann eine Trennung der Prozesskammer beispielsweise durch eine Glasscheibe oder einem anderen brennstoffresistenten und zugleich strahlungsdurchlässigen Material erfolgen.

Die im Prozessraum durch Umwandlung gewonnene reformierte Brennstoff tritt durch ein strahlungsdichtes Gitter oder einem Porenkörper aus und wird, soweit notwendig einem geeigneten Katalysator, und anschließend der Brennstoffzelle zugeführt.

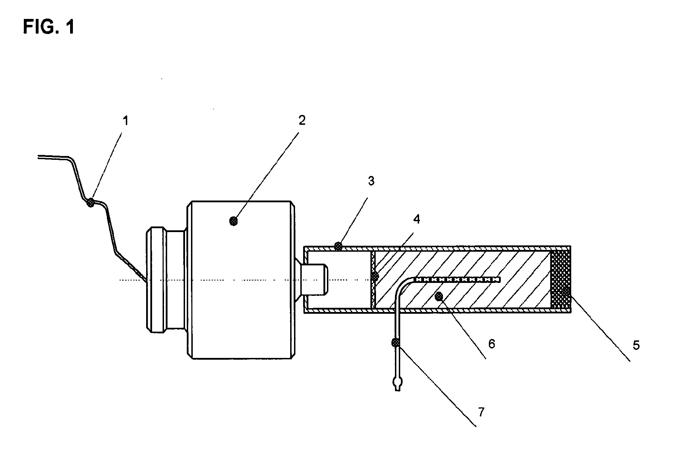

Nachfolgend wird die Erfindung anhand von Fig. 1 beispielhaft näher erläutert.

Fig. 1 zeigt eine schematische Ansicht des Magnetrons mit Prozessraum inklusive Brennstoffeinlass (7) und Auslass (5) für reformierten Brennstoff, sowie optionalen Elementen wie Vlies und eine physikalische Trennung des Brennstoffes vom Magnetron durch eine Trenneinrichtung (4).

Im Ausführungsbeispiel ist in Fig. 1 der Prozessraum (3) im Schnitt dargestellt. Der Brennstoff tritt durch ein als perforiertes Rohr dargestellte Brennstoffeinbringung (7) in die Prozesskammer, welche beispielhaft als Metallrohr (3) dargestellt ist, ein. Dabei wird der Brennstoff optional von einem Vlies aufgenommen (6). Das Magnetron (2) mit Stromzufuhr (1) ragt mit dem Strahlungsaustritt in den Prozessraum (3) und wird von einem brennstoffresistenten und zugleich strahlungsdurchlässigen Material (4) vom Brennstoff getrennt.

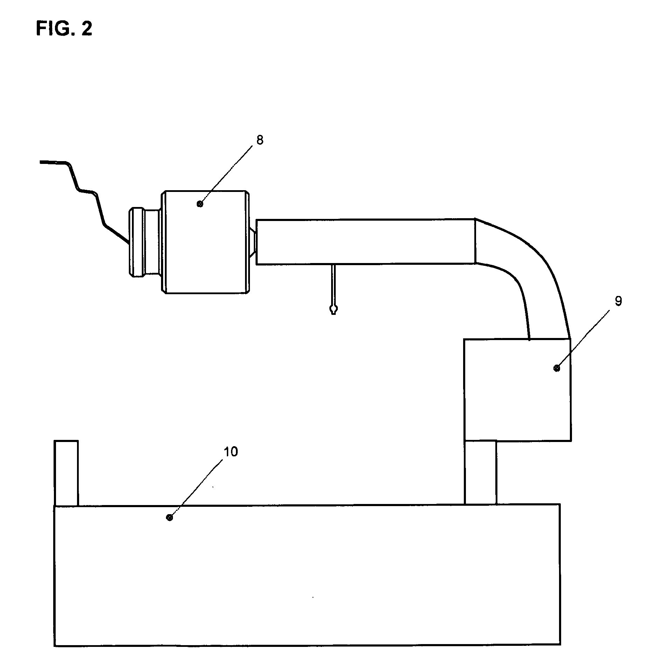

Fig. 2 zeigt eine schematische Ansicht des Reformers mit Brennstoffzelle und optional zwischengeschaltetem Katalysator.

Im diesem Ausführungsbeispiel ist der Reformer (8) als solches zusammen mit einer Brennstoffzelle (9) und einem optionalen Katalysator (10) dargestellt. Dabei wird auf Vollständigkeit der Beschreibung der Funktionen der Brennstoffzelle und deren zusätzlichen Aggregate sowie der Wärme- und Stromgewinnung verzichtet, da sie dem Fachmann bekannt sind.

## Patentansprüche

1. Reformer zur Reformierung von Brennstoff für Brennstoffzellen, umfassend:
eine Prozesskammer (3), und
eine Mikrowellenquelle (2) zur Erzeugung von Mikrowellenstrahlung,
wobei die Prozesskammer (3) und die Mikrowellenquelle (2) derart zueinander angeordnet sind, dass in der Prozesskammer (3) enthaltener Brennstoff mittels Mikrowellenstrahlung reformierbar ist.

2. Reformer nach Anspruch 1, wobei die Mikrowellenquelle (2) und die Prozesskammer (3) über eine Öffnung in der Prozesskammer mechanisch miteinander verbunden sind.

3. Reformer nach Anspruch 2, wobei die Prozesskammer (3) einen ersten und einen zweiten Abschnitt aufweist, der erste Abschnitt die Öffnung umfasst, der zweite Abschnitt für den Brennstoff vorgesehen ist, und der erste und der zweite Abschnitt durch eine brennstoffresistente, für Mikrowellenstrahlung durchlässige Trenneinrichtung (4) von der Mikrowellenquelle (2) getrennt sind.

4. Reformer nach Anspruch 3, wobei die Trenneinrichtung (4) Glas umfasst.

5. Reformer nach einem der vorhergehenden Ansprüche, wobei die Prozesskammer (3) einen Einlass (7) für Brennstoff und einen Auslass (5) für reformierten Brennstoff aufweist.

6. Reformer nach Anspruch 5, wobei der Auslass (5) ein mikrowellenstrahlungsdichtes Gitter oder einen mikrowellenstrahlungsdichten Porenkörper umfasst.

7. Reformer nach einem der vorhergehenden Ansprüche, wobei in der Prozesskammer (3) ein Verteiler (6) für Brennstoff, vorzugsweise in Form eines Vlieses (6), vorgesehen ist.

8. Reformer nach einem der vorhergehenden Ansprüche, wobei die Prozesskammer (3) mikrowellenstrahlungsdicht ausgebildet ist, vorzugsweise eine Metallwand oder mehrere Metallwände umfasst, und höchst vorzugsweise eine Edelstahlwand oder mehrere Edelstahlwände umfasst.

9. Reformer nach einem der vorhergehenden Ansprüche, wobei weiterhin ein Katalysator (9) zur Weiterbehandlung des reformierten Brennstoffs vorgesehen ist.

10. Reformer nach einem der vorhergehenden Ansprüche, wobei die Mikrowellenquelle (2) ein Magnetron (2) ist.

11. System, umfassend:
einen Reformer nach einem der Ansprüche 1 bis 10, und
eine Brennstoffzelle (10), welcher durch den Reformer reformierter Brennstoff zuführbar ist.

12. Verfahren zur Reformierung von Brennstoff für Brennstoffzellen, in welchem der Brennstoff mit Mikrowellen reformiert wird.
